# EUROPEAN PATENT SPECIFICATION

(11) **EP 3 015 990 B1**
(45) Date of publication and mention of the grant of the patent: **08.08.2018**
(21) Application number: 13888268.3
(22) Date of filing: 27.06.2013
(51) Int. Cl.: G06F 13/00

(54) **INFORMATION PROCESSING DEVICE, AND DESTINATION INFORMATION UPDATING METHOD AND PROGRAM**
INFORMATIONSVERARBEITUNGSVORRICHTUNG SOWIE ZIELINFORMATIONSAKTUALISIERUNGSVERFAHREN UND PROGRAMM
DISPOSITIF DE TRAITEMENT D'INFORMATIONS AINSI QUE PROCÉDÉ ET PROGRAMME DE MISE À JOUR D'INFORMATIONS DE DESTINATION

(43) Date of publication of application: 04.05.2016
(73) Proprietor: Fujitsu Limited, Kawasaki-shi, Kanagawa 211-8588 (JP)
(72) Inventor: NAKAMURA, Yosuke, Kawasaki-shi Kanagawa 211-8588 (JP); ITO, Hidenobu, Kawasaki-shi Kanagawa 211-8588 (JP); NIMURA, Kazuaki, Kawasaki-shi Kanagawa 211-8588 (JP)
(74) Representative: Haseltine Lake LLP
(86) International application number: PCT/JP2013/067733
(87) International publication number: WO 2014/207880

(56) References cited:
- EP-A1- 2 506 533
- WO-A1-2011/091421
- WO-A1-2013/047093
- CN-A- 102 333 105
- JP-A- 2012 060 282
- JP-A- 2012 230 555
- JP-A- 2013 090 071
- US-A1- 2012 210 415
- APPLE INC: "Apple Push Notification Service Programming Guide", INTERNET CITATION, 14 August 2009 (2009-08-14), pages 1-38, XP002615612, Retrieved from the Internet: URL:http://markmail.org/download.xqy?id=hs k5hjvtkrixm23c&number=1 [retrieved on 2011-01-04]

## Description

### Technical Field

The embodiments discussed herein are related to an information processing device, a destination information updating method, and a program.

### Background Art

Services using a push-type distribution system that transmits a message from a Web server owned by an information distribution service provider (hereinafter this may be referred to simply as a "Web server") to a client terminal that is a mobile communication terminal such as a smartphone or a tablet are increasing. Examples of the services above include Google Cloud Messaging (GCM) of Android (registered trademark) and Apple Push Notification Service (APNs) (registered trademark) of iOS (registered trademark).

In general, the push-type distribution system includes a server (also referred to as a "PUSH server") and a Web server owned by an information distributor (hereinafter this may be referred to simply as a "Web server"). The PUSH server and the Web server are provided on the internet (a cloud network). The server is connected to a client terminal via a portable telephone line or a wireless LAN so as to transmit, from the server, information such as data of an application installed onto the client terminal at an appropriate timing.

In the push-type distribution system, a destination of a push message is an application installed onto the client terminal, and therefore destination information that can uniquely identify a combination of the client terminal and the application is needed. The destination information is obtained from the PUSH server of the push-type distribution system when the client terminal starts using the push-type distribution system. As the destination information, the PUSH server generates unique information. Destination information allocated to a terminal is transmitted to a Web server owned by a service provider through a route that is different from the push-type distribution system.

It is preferable that the PUSH server periodically update the destination information from the viewpoint of security. The destination information is first updated in the PUSH server and the terminal. Then, new destination information is reported from the terminal to the Web server, and the entire process for updating the destination information is completed.

### Prior Art Documents

### Patent Documents

Patent Document 1: Japanese Laid-open Patent Publication No. 2003-134566
Patent Document 2: Japanese Laid-open Patent Publication No. 2004-56543
Patent Document 3: International Publication Pamphlet No. WO 2008/035450
Patent Document 4: Japanese Laid-open Patent Publication No. 2012-230555

Internet Citation: Apple Inc, "Apple Push Notification Service Programming Guide", 14 August 2009, pages 1-38, Retrieved from the Internet on 2011-01-04 <URL:http://markmail.org/download.xqy?id=hsk5hjvtkrixm23c&n umber=1>

### Summary of the Invention

### Problem to be Solved by the Invention

In the push-type distribution system, it is important to transmit a message from a cloud network to a client terminal at an appropriate timing, and a real-time nature is needed. On the other hand, it is preferable that the PUSH server periodically update the destination information from the viewpoint of security. In a method in which the destination information is first updated in the PUSH server and the client terminal, new destination information is then reported from the client terminal to a Web server owned by an information distribution service provider, and the entire process for updating the destination information is completed, a time difference in updating the destination information is generated among the terminal, the PUSH server, and the Web server. Therefore, there is a problem wherein a push message fails to be transmitted from the Web server owned by the service provider and a real-time nature of the push-type distribution system is impaired.

Accordingly, it is an object in one aspect of the invention to provide an information processing device, a destination information updating method, and a destination information updating program for updating destination information without impairing a real-time nature while ensuring security in a push-type distribution system.

### Means for Solving the Problem

An information processing device is provided that transmits a push message to a terminal onto which an application having a first destination identifier as an identifier is installed, in response to a push message transmission request report from a Web server. The information processing device includes a destination ID storage that, in accordance with the application installed onto the terminal, stores the first destination identifier stored in the terminal as a terminal destination identifier, and stores the first destination identifier as a service destination identifier; a PUSH transceiver that transmits a second destination identifier to the terminal, and receives, from the terminal, a destination ID updating completion report indicating that the terminal has updated the first destination identifier to the second destination identifier; a destination ID updating unit that updates the terminal destination identifier of the destination ID storage from the first destination identifier to the second destination identifier; and a PUSH receiver that, when a third destination identifier included in a push message transmission request report received from the Web server coincides with the service destination identifier of the destination ID storage, generates the push message including the terminal destination identifier instead of the third destination identifier, and instructs the PUSH transceiver to transmit the second push message to the terminal; the information processing device and the terminal are connected so as to transmit information from the information processing device to the terminal at an arbitrary timing, and the information processing device and the Web server are connected such that the information processing device issues a response in response to a request from the Web server.

### Effects of the Invention

In a push-type distribution system, an information processing device, a destination information updating method, and a destination information updating program for updating destination information without impairing a real-time nature while ensuring security is provided.

### Brief Description of the Drawings

FIG. 1 is a schematic diagram of a push-type distribution system.
FIG. 2 illustrates an example of a destination table stored in a destination ID storage of a PUSH server in a comparative example.
FIG. 3 illustrates an example of a flow of a destination information updating process in a comparative example.
FIG. 4 illustrates another example of a flow of a destination information updating process in a comparative example.
FIG. 5 is an exemplary block diagram illustrating functions of a PUSH server, a terminal, and the Web server in an example.
FIG. 6 illustrates an example of a destination table stored in a destination ID storage of a PUSH server in an example.
FIG. 7A illustrates an example of a format of a destination ID updating report.
FIG. 7B illustrates an example of a format of a destination ID updating completion report.
FIG. 7C illustrates an example of a format of a push message transmission request report.
FIG. 7D illustrates an example of a format of a response report to a push message transmission request report.
FIG. 7E illustrates an example of a format of a push message.
FIG. 8 illustrates an example of a destination table in a plurality of destination information updating processes in an example.
FIG. 9 illustrates an example of a configuration of an information processing device in an example.
FIG. 10 illustrates an example of a flow of a destination information updating process.

### Description of Embodiments

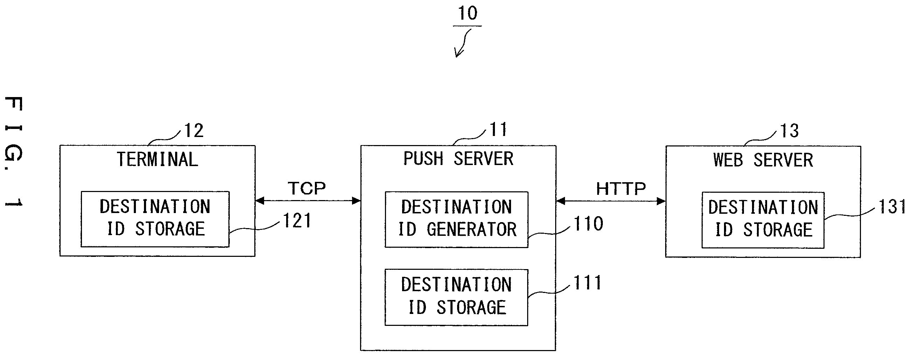

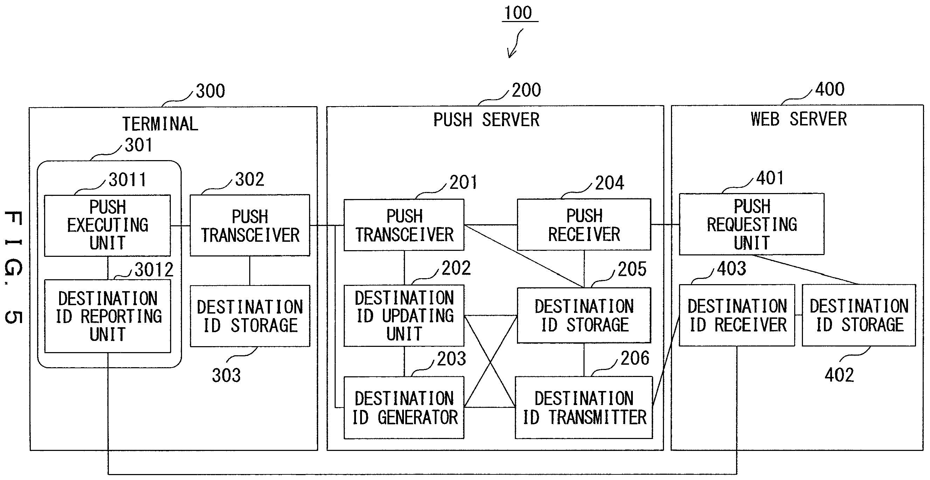

With reference to FIGS. 1-4, a comparative example of a push-type distribution system is described below. Then, with reference to FIGS. 5-10, an example of a push-type distribution system is described. The example of the push-type distribution system discloses a push-type distribution system wherein, in updating destination information including an identifier of an application installed onto a terminal, a PUSH server that transmits a push message to the terminal in response to a push message transmission request report from a Web server stores the destination information before and after updating, receives the push message transmission request report that specifies the destination information before updating, converts the destination information before updating into the destination information after updating, and transmits the push message to the terminal.

### <Comparative example>

FIG. 1 is a schematic diagram of a push-type distribution system. As illustrated in FIG. 1, in general, a push-type distribution system 10 is configured of a PUSH server 11 that is a server of a cloud network (or the internet), a terminal 12, and a Web server 13 of an information distribution service provider (hereinafter, this may be referred to simply as a "Web server"). The terminal 12 and the Web server 13 are connected to a cloud network including a push server. A service provided by a provider that owns the Web server 13 is not particularly limited, and may be any service that a user that owns a terminal can receive by installing an application onto the terminal. Specific examples of the service include distribution of a platform of a social network, a social game, and information relating to recreation, news, town information or the like. Of course, the service is not limited to the above.

The terminal 12 may be a mobile portable terminal such as a smartphone or a tablet, and an application that realizes an information distribution service is installed onto the terminal 12. In the push-type distribution system, a destination of a push message transmitted from the PUSH server 11 is the application installed onto the terminal 12, and therefore destination information that can uniquely identify a combination of the terminal 12 and the application is given.

In general, communication between the PUSH server 11 and the terminal 12 may be performed in conformity of, for example, TCP or an original protocol, and the PUSH server 11 and the terminal 12 are always in a state communicable with each other. Namely, a message can be transmitted in real time from the PUSH server 11 to the terminal 12 in unicast communication. A protocol used for the unicast transmission above may specify an original message format on a TCP socket.

Communication between the PUSH server 11 and the Web server 13 may be performed in conformity of, for example, the HTTP protocol, and when a request is transmitted from the Web server 13 to the PUSH server 11, a reply may be transmitted from the PUSH server 11 to the Web server 13.

As information provided by a provider that owns the Web server 13, a push message transmission request report is first transmitted from the Web server 13 to the PUSH server 11. The push message transmission request report is a report that causes the PUSH server 11 to distribute data to an application installed onto the terminal 12. In response to the push message transmission request report, the PUSH server 11 transmits a push message to the terminal 12 in unicast communication. Stated another way, in the push-type distribution system, a destination of the push message is the application installed onto the terminal 12. In the push-type distribution system, a destination ID that is uniquely generated by the PUSH server and that is an identifier (ID) indicating a destination is used.

Here, the destination ID specifies an application installed onto a certain terminal 12.

As illustrated in FIG. 1, the PUSH server 11, the terminal 12, and the Web server 13 respectively include destination ID storages 111, 121, and 131. The PUSH server 11 includes a destination ID generator 110. In updating a destination ID that corresponds to an application installed onto the terminal 12 periodically or in response to a command from the outside in order to ensure security, the destination ID generator 110 performs a process of generating an identifier (ID) after updating. In FIG. 1, the destination ID generator 110 is illustrated in order to emphasize that the PUSH server 11 generates the destination ID. In addition to this, the PUSH server 11, the terminal 12, and the Web server 13 have a function of performing communication and a function of updating destination IDs stored in the destination ID storages 111, 121, and 131. The terminal 12 and the Web server 13 are assumed to include means for transmitting destination information allocated to the application installed onto the terminal 12 from the terminal 12 to the Web server 13, separately from the push-type distribution system.

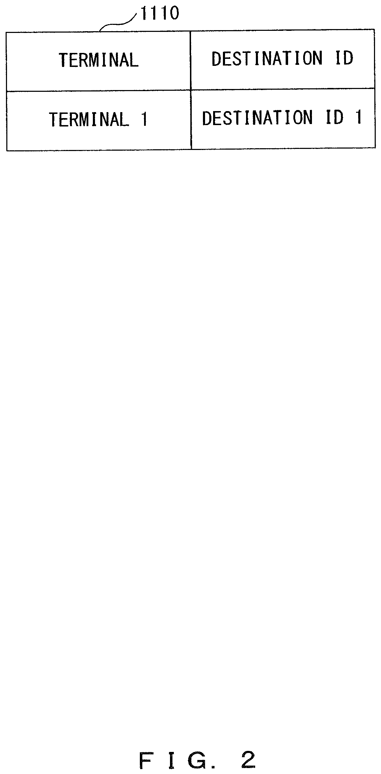

FIG. 2 illustrates an example of a destination table 1110 stored in the destination ID storage 111 of the PUSH server 11. Hereinafter, an example in which the destination table illustrated in FIG. 2 is stored in the destination ID storage 111 of the PUSH server 11 may be referenced as a comparative example.

In the destination table, a relationship between a terminal and a destination ID is stored. In the example of FIG. 2, "terminal 1" indicating the terminal 12 onto which the application is installed is stored in the field "terminal", and "destination ID 1" specifying the application installed onto the terminal 12, which is specified by "terminal 1", is stored in the field "destination ID". As an example, "terminal 1" may be any string that can be distinguished from others. "destination ID 1" may be any string that can specify the application installed onto the terminal 12, such as a string generated by combining a MAC address of the terminal 12 and a manufacturing number of the application.

It is preferable that the PUSH server 11 periodically update destination information such as the destination ID from the viewpoint of security. The description below is given taking the destination ID as an example of the destination information, but another kind of destination information may be employed similarly. In order to update the destination ID, the destination ID generator 110 of the PUSH server 11 generates new destination information, such as the destination ID, periodically or in response to a command from the outside. The newly generated destination ID is stored in the destination ID storage 111 by the destination ID generator 110 of the PUSH server 11. In this case, a destination ID that has already been stored is overwritten with the new destination ID. The updated destination ID is transmitted from the PUSH server 11 to the terminal 12, and destination information stored in the destination ID storage 121 of the terminal 12 is updated. Then, new destination information is reported from the terminal 12 to the Web server 13, and when update information stored in the destination ID storage 131 of the Web server 13 is updated, updating of the destination information throughout the entirety of the push-type distribution system 10 is completed.

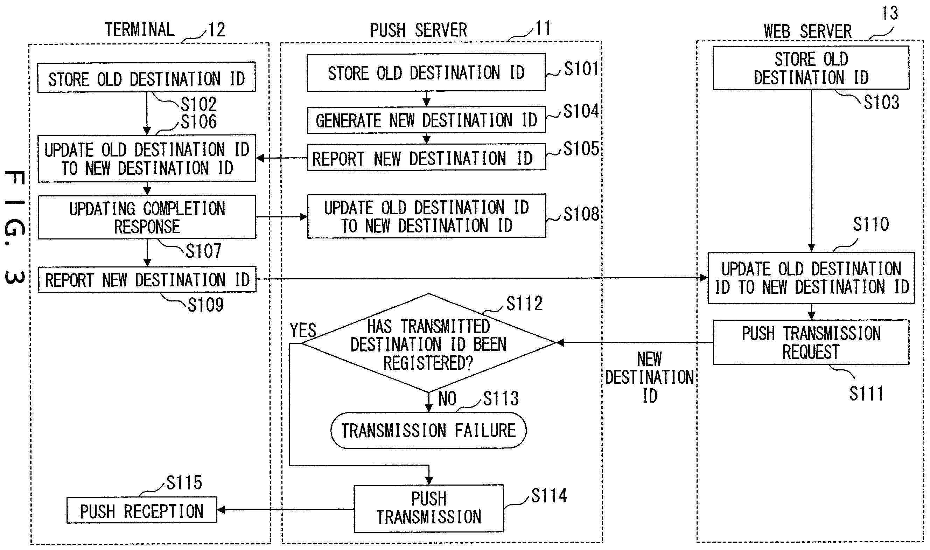

FIG. 3 illustrates an example of a flow of a destination information updating process in the comparative example. FIG. 3 illustrates a process of updating an old destination ID that is a current destination ID to a new destination ID.

The push-type distribution system 10 in the comparative example is configured of the PUSH server 11 that is a cloud server, the terminal 12, and the Web server 13 owned by an information providing service provider.

In S101, the destination ID storage 111 of the PUSH server 11 stores an old destination ID.

In S102, simultaneously with S101, the destination ID storage 121 of the terminal 12 stores "old destination ID" as an identifier that corresponds to an application installed onto the terminal 12.

In S103, simultaneously with S101, the destination ID storage 131 of the Web server 13 stores "old destination ID" as an identifier that corresponds to the application installed onto the terminal 12.

In S104 that follows S101, the PUSH server 11 generates "new destination ID" as an identifier that corresponds to the application installed onto the terminal 12.

In S105 that follows S104, the PUSH server 11 reports "new destination ID" to the terminal 12.

In S106, the terminal 12 receives "new destination ID" reported from the PUSH server 11, and updates "old destination ID" stored in the destination ID storage 121 of the terminal 12 to "new destination ID". Namely, an ID of the application installed onto the terminal 12 is updated.

In S107 that follows S106, the terminal 12 reports the completion of updating of the destination ID to the PUSH server 11. As illustrated in FIG. 3, the process in this step is also referred to as an "updating completion response".

Upon receipt of the updating completion response from the terminal 12 in S107, the PUSH server 11 updates the destination ID stored in the destination ID storage 111 to the new destination ID in S108. As a result of the processes above, the destination IDs stored in the destination ID storage 111 of the PUSH server 11 and the destination ID storage 121 of the terminal 12 are updated.

In S109 that follows S107, the terminal 12 reports the new destination ID stored in the destination ID storage 121 of the terminal 12 to the Web server 13. This report is transmitted from the terminal 12 to the Web server 13 via a network.

In S110 that follows S103, the Web server 13 receives "new destination ID" reported from the terminal 12, and updates "old destination ID" stored in the destination ID storage 131 of the Web server 13 to "new destination ID". As a result of the processes above, the destination IDs stored in the destination ID storage 111 of the PUSH server 11, the destination ID storage 121 of the terminal 12, and the destination ID storage 131 of the Web server 13 are updated.

In S111 that follows S110, the Web server 13 transmits, to the PUSH server 11, a request for PUSH transmission of a push message. In this case, the Web server 13 reports, to the PUSH server 11, a request for transmission of a push message to the new destination ID. This process is referred to as a "PUSH transmission request" in FIG. 3.

In S112, the PUSH server 11 determines whether the destination ID transmitted from the Web server 13 has been registered in the destination ID storage 111 of the PUSH server 11. When the determination result is "NO (N)", namely, when the destination ID transmitted from the Web server 13 has not been registered in the destination ID storage 111 of the PUSH server 11, the process moves on to S113. When the determination result is "YES (Y) " , namely, when the destination ID transmitted from the Web server 13 has been registered in the destination ID storage 111 of the PUSH server 11, the process moves on to S114. In this example, the new destination ID has been registered in the destination ID storage 111 of the PUSH server 11, and the process moves on to S114.

In S113, the PUSH server 11 fails to transmit a message, and finishes the process.

In S114, the PUSH server 11 transmits a message to the terminal 12 . This process is referred to as "PUSH transmission" in FIG. 3.

In S115, the terminal 12 receives the message transmitted from the PUSH server 11 in the PUSH transmission in S114. This process is referred to as "PUSH reception" in FIG. 3.

In the case illustrated in FIG. 3, after all of the destination IDs stored in the destination ID storage 111 of the PUSH server 11, the destination ID storage 121 of the terminal 12, and the destination ID storage 131 of the Web server 13 are updated, the Web server 13 performs the PUSH transmission request. This allows a message to be transmitted from the PUSH server 11 to the terminal 12 in unicast communication.

However, a time difference in updating destination information is generated among the terminal 12, the PUSH server 11, and the Web server 13, and therefore the PUSH server 11 may fail to transmit a message from the Web server 13 to the terminal 12 as a result of updating the destination information. Specifically, when the Web server 13 performs the PUSH transmission request before reporting the destination information from the terminal 12 to the Web server 13, and when the destination information fails to be reported from the terminal 12 to the Web server 13, the PUSH server 11 fails to transmit the message from the Web server 13 to the terminal 12.

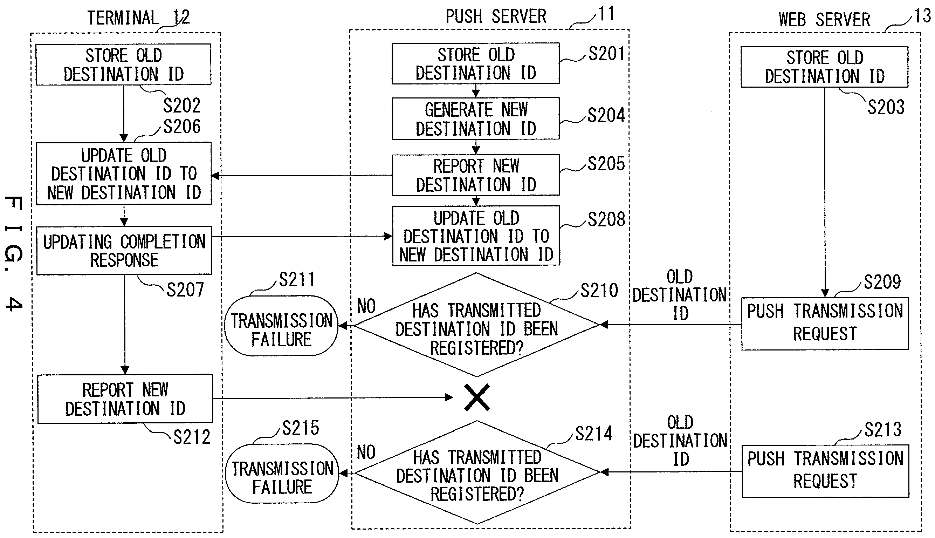

FIG. 4 illustrates another example of a flow of a destination information updating process in the comparative example. FIG. 4 illustrates a process of updating an "old destination ID" that is a current destination ID to a "new destination ID". In the example illustrated in FIG. 4, the PUSH server 11 fails to transmit the message from the Web server 13 to the terminal 12 as a result of updating the destination information.

In S201, the destination ID storage 111 of the PUSH server 11 stores an old destination ID.

In S202, simultaneously with S201, the destination ID storage 121 of the terminal 12 stores the "old destination ID".

In S203, simultaneously with S201, the destination ID storage 131 of the Web server 13 stores the old destination ID.

As described above, it is assumed that all of the destination ID storage 111 of the PUSH server 11, the destination ID storage 121 of the terminal 12, and the destination ID storage 131 of the Web server 13 initially store the "old destination ID".

In S204 that follows S201, the PUSH server 11 generates a "new destination ID".

In S205 that follows S204, the PUSH server 11 reports the "new destination ID" to the terminal 12.

In S206, the terminal 12 receives the new destination ID reported from the PUSH server 11, and updates the old destination ID stored in the destination ID storage 121 of the terminal 12 to the new destination ID. Namely, an ID of an application installed onto the terminal 12 is updated.

In S207 that follows S206, the terminal 12 reports the completion of updating of the destination ID to the PUSH server 11. As illustrated in FIG. 4, the process of this step is also referred to as an "updating completion response".

Upon receipt of a report of the updating completion response from the terminal 12 in S207, the PUSH server 11 updates the destination ID stored in the destination ID storage 111 to the "new destination ID" in S208. As a result of the processes above, the destination IDs stored in the destination ID storage 111 of the PUSH server 11 and the destination ID storage 121 of the terminal 12 are updated. At this time, the destination ID stored in the destination ID storage 131 of the Web server 13 is still the "old destination ID".

In S212 that follows S207, the terminal 12 performs a process of reporting the "new destination ID" stored in the destination ID storage 121 of the terminal 12 to the Web server 13.

However, in this example, after the terminal 12 performs the process of S207 and before the terminal 12 performs the process of S212, the Web server 13 performs the PUSH transmission request in S209. For the destination ID at this point in time, the "old destination ID" stored in the destination ID storage 131 of the Web server 13 is used. Namely, regardless of an updating state of the destination ID stored in the destination ID storage 131 of the Web server 13, the PUSH server 11 is updated to the new destination ID at this time. As a result, the Web server 13 fails to transmit a message specifying the old destination ID.

In S210 that follows S209, the PUSH server 11 receives, from the Web server 13, a report of a request for PUSH transmission of a message, and determines whether the destination ID has been registered in the destination ID storage 111 of the PUSH server 11. In this example, the determination result is "NO (N)", namely, the destination ID transmitted from the Web server 13 has not been registered in the destination ID storage 111 of the PUSH server 11, and therefore the process moves on to S211.

In S211, the PUSH server 11 fails to transmit a message, and finishes the process. Namely, the terminal 12 receives a message of the "old destination ID" but fails to internally process the message because the terminal 12 is operated with the "new destination ID". Therefore, an error is generated.

In S212, the terminal 12 performs a process of reporting the new destination ID stored in the destination ID storage 121 of the terminal 12 to the Web server 13. However, the Web server 13 fails to receive a report transmitted from the terminal 12.

In S213 that follows S209, the Web server 13 performs the PUSH transmission request again. For the destination ID at this time, the "old destination ID" stored in the destination ID storage 131 of the Web server 13 is used.

In S214, the PUSH server 11 receives, from the Web server 13, a report of a request for PUSH transmission of a message, and determines whether the destination ID has been registered in the destination ID storage 111 of the PUSH server 11. In this case, the determination result is "NO (N) " , namely, the destination ID transmitted from the Web server 13 has not been registered in the destination ID storage 111 of the PUSH server 11, and therefore the process moves on to S215.

In S215, the PUSH server 11 fails to transmit a message, and finishes the process.

In the case illustrated in FIG. 4, only the Web server 13 stores the destination information before updating. When a message is transmitted by using the old destination ID, the message does not reach the terminal because of an unknown destination, and the message from the Web server 13 fails to be transmitted to a user of the terminal 12. In the push-type distribution system, it is important to transmit a message from the PUSH server 11 of a cloud network to the terminal (client terminal) 12 at an appropriate timing, and a real-time nature is needed.

A push-type distribution system having a structure in which an information distribution service is continuously provided while destination information is periodically updated in order to ensure security is described below.

### <Push-type distribution system>

FIG. 5 is an exemplary block diagram illustrating functions of a PUSH server 200, a terminal 300, and a Web server 400 owned by an information distribution service provider (hereinafter, this may be referred to as a "Web server") in an example. The PUSH server 200, the terminal 300, and the Web server 400 configure a push-type distribution system 100. The PUSH server 200 is a server of a cloud network (or the internet). The terminal 300 and the Web server 400 are connected to the cloud network. The push-type distribution system 100 can transmit a message from the Web server 400 via the PUSH server 200 to the terminal 300, similarly to the push-type distribution system 10 illustrated in FIG. 1. All of the PUSH server 200, the terminal 300, and the Web server 400 are also referred to as information processing devices. The PUSH server 200, the terminal 300, and the Web server 400 respectively have functions similar to the PUSH server 11, the terminal 12, and the Web server 13 in FIG. 1, but the PUSH server 200, the terminal 300, and the Web server 400 are different from the PUSH server 11, the terminal 12, and the Web server 13 in FIG. 1 in that a structure is included in which a service can continuously use a push-type distribution system while destination information is periodically updated.

As an example, the PUSH server 200 illustrated in FIG. 5 may have two destination identifiers (hereinafter referred to simply as "destination IDs") that correspond to an identifier (ID) of an application installed onto the terminal 300, that is, a terminal destination ID that is a destination ID stored in the terminal 300 and a service destination ID that is a destination ID stored in the Web server 400. Depending on a timing, the terminal destination ID may be a "new destination ID" after updating, and the service destination ID may be an "old destination ID" before updating. Upon receipt of a push message transmission request report from the Web server 400, the PUSH server 200 reports to the Web server 400 that an identifier (ID) of an application installed onto the terminal 300 has been updated to the "new destination ID", and updates a service destination ID stored in the PUSH server 200 itself to the "new destination ID" after updating. The push message transmission request report is a report that causes the PUSH server 200 to distribute data to the application installed onto the terminal 300.

By configuring the push-type distribution system 100 as described above, an identifier (ID) (a destination identifier (destination ID)) of the application installed onto the terminal 300 can be periodically updated while a service is continuously provided in the push-type distribution system, and both usability and security of the service can be achieved. Further, a report from the terminal 300 to the Web server 400 about updating of the identifier (destination ID) of the application installed onto the terminal 300 is optional, and this allows an application to be developed more easily.

In the description below, the terms "destination ID", "new ID", and "old ID" are defined to be identifiers (IDs) that specify the application installed onto the terminal 300. However, the terms "destination ID", "new ID", and "old ID" may be defined to be identifiers (IDs) that merely specify the terminal 300. In the latter case, the terminal 300 is assumed to have a function of forwarding a push message to a prescribed application upon receipt of the push message.

The PUSH server 200 may be a cloud server, similarly to the PUSH server 11 illustrated in FIG. 1.

The PUSH server 200 includes a PUSH transceiver 201, a destination ID updating unit 202, a destination ID generator 203, a PUSH receiver 204, a destination ID storage 205, and a destination ID transmitter 206.

The terminal 300 may be a portable information processing device such as a smartphone or a tablet, similarly to the terminal 12. The terminal 300 includes an application 301, a PUSH transceiver 302, and a destination ID storage 303. The application 301 further includes a PUSH executing unit 3011 and a destination ID reporting unit 3012.

The Web server 400 may be a Web server owned by an information distribution service provider, similarly to the Web server 13. The Web server 400 includes a PUSH requesting unit 401, a destination ID storage 402, and a destination ID receiver 403.

The PUSH server 200, the terminal 300, and the Web server 400 can communicate information with each other via a network including the PUSH server 200. In this case, similarly to the push-type distribution system 10 illustrated in FIG. 1, communication between the PUSH server 200 and the terminal 300 may be performed in conformity of, for example, TCP or an original protocol, and both the PUSH server 200 and the terminal 300 are always in a state communicable with each other. Namely, a message can be transmitted from the PUSH server 200 to the terminal 300 in real time. The original protocol may specify an original message format on a TCP socket.

The destination ID reporting unit 3012 of the terminal 300 is configured to transmit a destination ID that is an identifier (ID) allocated to the application 301 of the terminal 300 to the destination ID receiver 403 of the Web server 400 outside a push distribution frame.

Communication between the PUSH server 200 and the Web server 400 may be performed in conformity of, for example, the HTTP protocol, and when a request is transmitted from the Web server 400 to the PUSH server 200, a reply is transmitted from the PUSH server 200 to the Web server 400.

The PUSH requesting unit 401 of the Web server 400 has a function of transmitting a push message transmission request report 606 that requests that the PUSH server 200 transmit a push message to the application 301 installed onto the terminal 300. When requesting that the PUSH server 200 transmit a push message to the application 301 of the terminal 300, an identifier (ID) that specifies the application 301 of the terminal 300 is needed. This ID is referred to as a "destination ID".

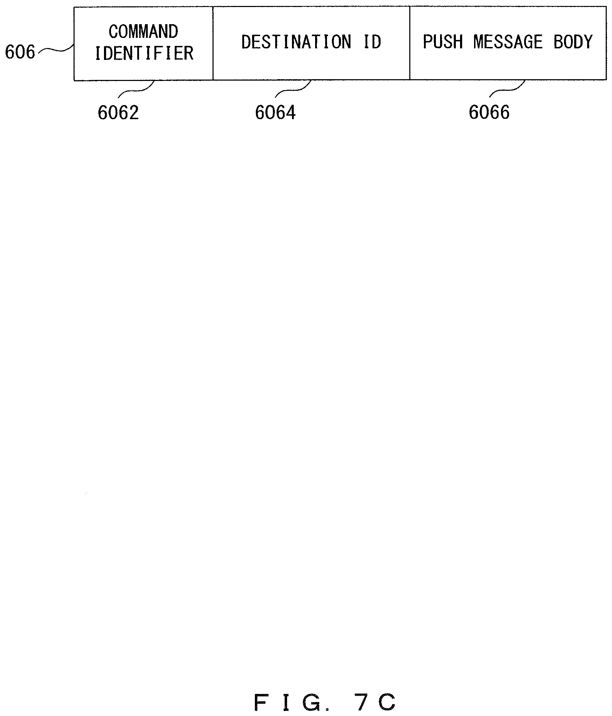

FIG. 7C illustrates an example of a format of the push message transmission request report 606.

As illustrated in FIG. 7C, the push message transmission request report 606 includes the field "command identifier" 6062 in which a command indicating that a report is a push message transmission request report is stored, the field "updated destination ID" 6064 in which a destination ID that corresponds to the application 301 of the terminal 300 is stored, and the field "push message body" 6066 in which a body of a push message is stored.

The destination ID storage 402 of the Web server 400 stores a destination table indicating a relationship between a terminal and a destination ID. The destination table stored in the destination ID storage 402 may be in a format that is the same as or similar to the format of the destination table 1110 illustrated in FIG. 2.

When the PUSH requesting unit 401 transmits the push message transmission request report 606 to the PUSH server 200 after a destination ID that is an identifier (ID) allocated to the terminal 300 is updated, the destination ID receiver 403 of the Web server 400 receives an updated destination ID report 608 including a destination ID after updating of the destination ID that corresponds to the application 301 of the terminal 300, as a response to the push message transmission request report 606.

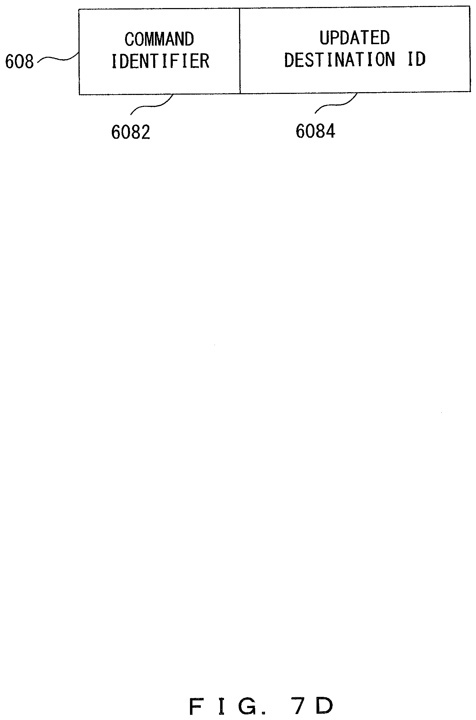

FIG. 7D illustrates an example of a format of the updated destination ID report 608.

As illustrated in FIG. 7D, the updated destination ID report 608 includes the field "command identifier" 6082 in which a command indicating that a report is an updated destination ID report is stored, and the field "updated destination ID" 6084.

In the field "updated destination ID" 6084, "new destination" that is reported from the terminal 300 to the PUSH server 200 and that is a destination ID after updating of the destination ID allocated to the application 301 of the terminal 300 is stored.

The destination ID receiver 403 of the Web server 400 receives, from the PUSH server 200, a destination ID that is an identifier (ID) allocated to the terminal 300, and stores the destination ID in the destination ID storage 402.

The destination ID receiver 403 of the Web server 400 receives, from the terminal 300, a report including a destination ID that was allocated to the application 301 of the terminal 300 for the first time after starting of the terminal 300. The destination ID receiver 403 further stores the destination ID allocated to the application 301 of the terminal 300 in the destination ID storage 402.

The PUSH receiver 204 of the PUSH server 200 receives a report of a request to transmit a message to the application 301 of the terminal 300, that is, the push message transmission request report 606, that has been transmitted from the PUSH requesting unit 401 of the Web server 400.

The PUSH receiver 204 of the PUSH server 200 generates a push message 610 addressed to the application 301 of specified terminal 300. A destination ID that is used in this case and that corresponds to the application 301 of the terminal 300 is obtained by referring to a destination table stored in the destination ID storage 205.

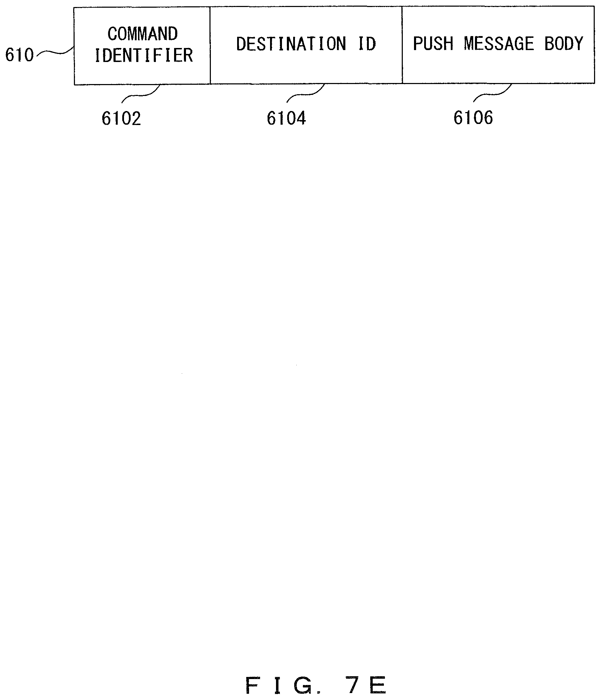

FIG. 7E illustrates an example of a format of the push message 610.

As illustrated in FIG. 7E, the push message 610 includes the field "command identifier" 6102 in which a command indicating a report is a push message is stored, the field "destination ID" 6104 in which a destination ID that corresponds to the application 301 of a specified terminal 300 is stored, and the field "push message body" 6106 in which a body of a message is stored.

The PUSH transceiver 201 of the PUSH server 200 transmits a message generated by the PUSH receiver 204 to the application 301 of the specified terminal 300 as the push message 610.

The PUSH transceiver 201 of the PUSH server 200 reports the destination ID that is generated by the destination ID generator 203 in accordance with an instruction from the destination ID updating unit 202 and that corresponds to the application 301 of the terminal 300 to the terminal 300 as a destination ID updating report 602.

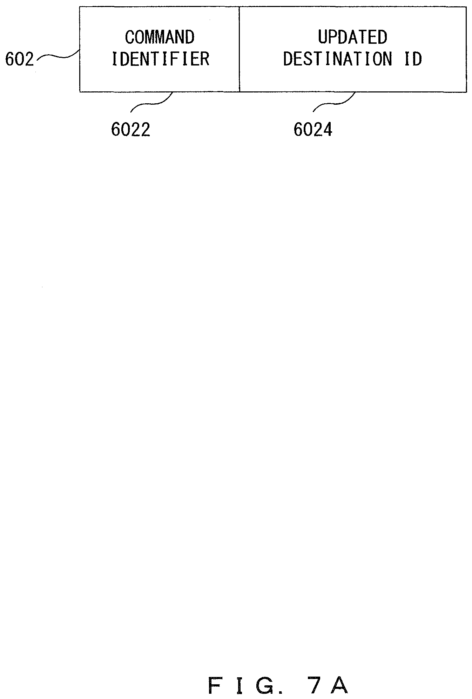

FIG. 7A illustrates an example of a format of the destination ID updating report 602.

As illustrated in FIG. 7A, the destination ID updating report 602 includes the field "command identifier" 6022 in which a command to cause the terminal 300 to update a destination ID is stored, and the field "updated destination ID" 6024 in which an updated destination ID that corresponds to the application 301 of the terminal 300 is stored.

The PUSH transceiver 201 of the PUSH server 200 receives, from the terminal 300, a destination ID updating completion report 604 indicating that updating of a destination ID has been finished in the terminal 300. In response to the destination ID updating completion report transmitted from the terminal 300, the PUSH transceiver 201 further issues, to the destination ID updating unit 202, a command to update a string that is stored in the field "terminal destination ID" in a destination table 2050 stored in the destination ID storage 205 to "new destination".

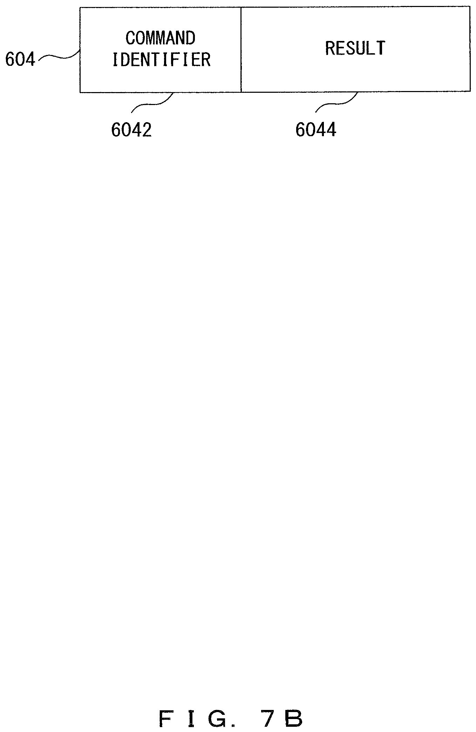

FIG. 7B illustrates an example of a format of the destination ID updating completion report 604.

As illustrated in FIG. 7B, the destination ID updating completion report 604 includes the field "command identifier" 6042 in which a command indicating that a report is a destination ID updating completion report is stored, and the field "result" 6044 in which a result indicating whether updating of a destination ID has succeeded in the terminal 300 is stored.

The destination ID storage 205 of the PUSH server 200 stores a destination table indicating a relationship between a terminal and a destination ID.

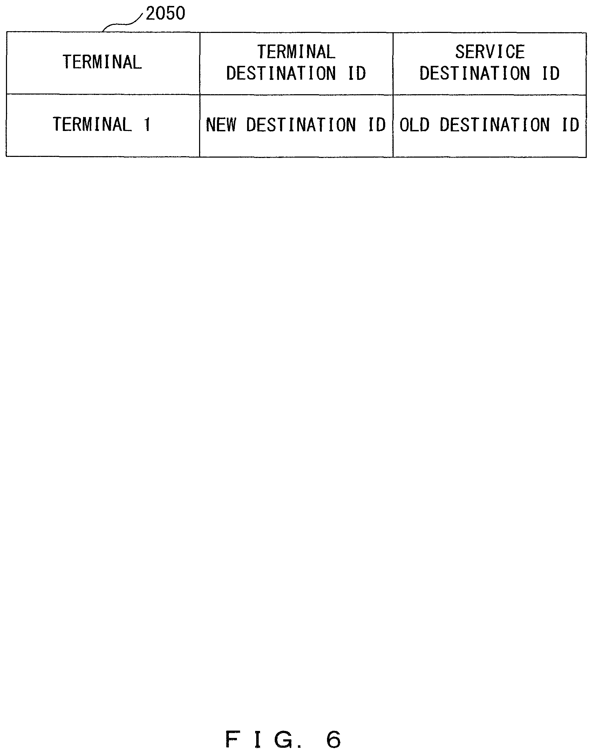

FIG. 6 illustrates an example of the destination table 2050 stored in the destination ID storage 205 of the PUSH server 200 in an example.

As illustrated in FIG. 6, the destination table 2050 includes three fields, "terminal", "terminal destination ID", and "service destination ID". The destination table 2050 is used for an information distribution service provider to continuously use a push-type distribution system while destination information is periodically updated.

In the destination table 2050 illustrated in FIG. 6, "terminal 1" is stored in the field "terminal", "new destination" allocated to the terminal 1 is stored in the field "terminal destination ID", and "old destination" that corresponds to a destination ID that is stored in the field "destination ID" in a destination table stored in the destination ID storage 402 of the Web server 400 is stored in the field "service destination ID". As an example, "terminal 1" may be any string that can specify an application installed onto the terminal 300, such as a string generated by combining a MAC address of the terminal 300 and a manufacturing number of the application. "new destination" and "old destination" may be arbitrary strings that can be distinguished from others. Namely, in the field "terminal destination ID" in the destination table 2050, "destination ID" in the destination table stored in a destination ID storage 304 of the terminal 300 is stored.

The destination ID that is used for the PUSH receiver 204 of the PUSH server 200 to generate the push message 610 addressed to the application 301 and that corresponds to the application 301 of the terminal 300 is determined as described below.
(D1) When a destination ID that is stored in the field "destination ID" 6064 of the push message transmission request report 606 transmitted from the Web server 400 coincides with "new destination ID" in the field "terminal destination ID" of a terminal in the destination table 2050, "new destination ID" is stored in the field "destination ID" 6104 of the push message 610.
(D2) When a destination ID that is stored in the field "destination ID" 6064 of the push message transmission request report 606 transmitted from the Web server 400 coincides with "old destination ID" in the field "service destination ID" of ID.

In S305 that follows S304, the PUSH transceiver 201 of the PUSH server 200 transmits the destination ID updating report 602 including the new destination ID generated in S301 to the terminal 300.

In S306, the PUSH transceiver 302 of the terminal 300 receives the destination ID updating report 602 transmitted from the PUSH server 200, and updates the old destination ID stored in the destination ID storage 303 of the terminal 300 to the new destination ID.

In S307 that follows S306, the PUSH transceiver 302 of the terminal 300 receives a report indicating that updating of the destination ID has been completed, and transmits the destination ID updating completion report 604 to the PUSH server 200. As illustrated in FIG. 4, the process of this step is also referred to as an "update completion response".

The PUSH transceiver 201 of the PUSH server 200 receives the report of the updating completion response from the terminal 300 in S307, the destination ID updating unit 202 of the PUSH server 200 updates a destination ID stored in the destination ID storage 205 to the new destination ID in S308. As a result of the processes above, the destination IDs stored in the destination ID storage 205 of the PUSH server 200 and the destination ID storage 303 of the terminal 300 are updated. At this time, a destination ID in a destination table stored in the destination ID storage 402 of the Web server 400 remains the old destination ID.

After the process of S308 is completed, in S309, the PUSH requesting unit 401 of the Web server 400 transmits the push message transmission request report 606 that requests that the PUSH server 200 transmit a message to the application 301 installed onto the terminal 300. In this case, the PUSH requesting unit 401 of the Web server 400 refers to the destination table stored in the destination ID storage 402. Namely, the old destination ID that corresponds to the server 200 receives the PUSH transmission request from the Web server 400 after the destination ID updating unit 202 receives, from the terminal 300, a report indicating that updating of the destination ID that is an identifier (ID) allocated to the terminal 300 has been finished and the destination ID has been updated to "new destination", the destination ID updating unit 202 issues, to the destination ID transmitter 206, a command to report to the Web server 400 that the identifier (ID) that specifies the application 301 of the terminal 300 has been updated to "new destination".

Upon receipt of the push message transmission request report 606 from the Web server 400, the destination ID updating unit 202 of the PUSH server 200 further issues, to the destination ID transmitter 206, a command to report to the Web server 400 that the identifier (ID) that specifies the application 301 of the terminal 300 has been updated to "new destination", that is, a command to transmit the updated destination ID report 608. The destination ID updating unit 202 of the PUSH server 200 further updates "old destination" stored in the field "service destination ID" in the destination table 2050 stored in the destination ID storage 205 to "new destination".

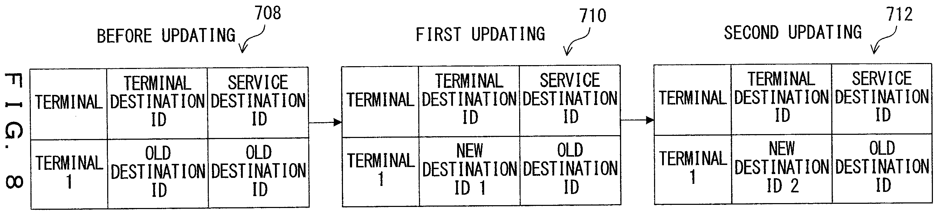

The destination ID updating unit 202 of the PUSH server 200 performs updating, as illustrated in FIG. 8, when the destination ID that is an identifier (ID) allocated to the terminal 300 is updated twice before the destination ID updating unit 202 receives the PUSH transmission request from the Web server 400.

Upon receipt from the terminal 300 of a report indicating that the first updating of the destination ID that is an identifier (ID) allocated to the terminal 300 has been finished, the destination ID updating unit 202 of the PUSH server 200 first updates the destination ID that is stored in the field "terminal destination ID" in the destination table 2050 stored in the destination ID storage 205 to "new destination ID 1". In this case, the destination ID in the field "service destination ID" in the destination table 2050 remains "old destination".

When the destination ID updating unit 202 of the PUSH server 200 receives, from the terminal 300, a report indicating that the second updating of the destination ID that is an identifier (ID) allocated to the terminal 300 has been finished before the destination ID updating unit 202 receives the PUSH transmission request from the Web server 400, the destination ID updating unit 202 updates the destination ID that is stored in the field "terminal destination ID" in the destination table 2050 stored in the destination ID storage 205 to "new destination ID 2". In this case, the destination ID in the field "service destination ID" in the destination table 2050 remains "old destination".

Stated another way, the destination ID updating unit 202 of the PUSH server 200 updates the destination ID in the field "terminal destination ID" in the destination table 2050, but does not update the destination ID in the field "service destination ID", until the destination ID updating unit 202 receives the PUSH transmission request from the Web server 400.

When the destination ID transmitter 206 of the PUSH server 200 receives the push message transmission request report 606 from the Web server 400 after the destination ID transmitter 206 receives, from the destination ID updating unit 202 of the PUSH server 200, a report which is addressed to the Web server 400 and indicates that the identifier (ID) that specifies the application 301 of the terminal 300 has been updated to "new destination", the destination ID transmitter 206 transmits, to the Web server 400, "new destination" that corresponds to the application 301 of the terminal 300 as the updated destination ID report 608. As described above, the destination ID transmitter 206 of the PUSH server 200 reports to the Web server 400 that an identifier of an application has been changed to a new destination identifier, in response to the push message transmission request report from the Web server 400.

As described above, the PUSH server 200 is an information processing device 200 that transmits a push message to the terminal 300 onto which the application 301 having the first destination identifier as an identifier has been installed, in response to the push message transmission request report from the Web server 400, and includes the destination ID storage 205, the destination ID generator 203, the PUSH transceiver 201, the destination ID updating unit 202, and the PUSH receiver 204.

The destination ID storage 205 stores the first destination identifier stored in the terminal 300 as a terminal destination identifier, and stores the first destination identifier as a service destination identifier, in accordance with the application 301 installed onto the terminal 300

The PUSH transceiver 201 transmits the second destination identifier to the terminal 300, and receives, from the terminal 300, a destination ID updating completion report indicating that the terminal 300 has updated the first destination identifier to the second destination identifier.

The destination ID updating unit 202 updates the terminal destination identifier of the destination ID storage 205 from the first destination identifier to the second destination identifier.

When the third destination identifier that is included in the first push message received from the Web server 400 coincides with the service destination identifier of the destination ID storage 205, the PUSH receiver 204 generates the second push message including the terminal destination identifier instead of the third destination identifier, and issues, to the PUSH transceiver 201, a command to transmit the second push message to the terminal 300.

The information processing device 200 may include the destination ID transmitter 206. When the PUSH transceiver 201 receives the destination ID updating completion report, the destination ID transmitter 206 reports to the Web server 400 that the identifier of the application 301 has been changed to the second destination identifier.

The PUSH transceiver 302 of the terminal 300 receives the destination ID updating report 602 and the push message 610 that have been transmitted from the PUSH transceiver 201 of the PUSH server 200. Examples of the formats of the destination ID updating report 602 and the push message 610 are illustrated in FIGS. 7A and 7E, respectively.

Upon receipt of the destination ID updating report 602, the PUSH transceiver 302 of the terminal 300 issues a command to update the destination ID in the destination table stored in the destination ID storage 303.

When updating of the destination ID in the destination table stored in the destination ID storage 303 is completed, the PUSH transceiver 302 of the terminal 300 transmits the destination ID updating completion report 604 to the PUSH server 200.

Upon receipt of the push message 610, the PUSH transceiver 302 of the terminal 300 further makes the PUSH executing unit 3011 of the application 301 execute a message included in the push message 610.

The push-type distribution system having the configuration above can update destination information without impairing its real-time nature while ensuring security. More specifically, the push-type distribution system having the configuration above can prevent a situation in which a message is not transmitted to the application 301 of a prescribed terminal 300, even when the push message transmission request report 606 including a destination before updating (an old destination) is transmitted from the Web server 400 after updating of the destination ID storage 303 of the terminal 300 is completed and before updating of a destination ID stored in the destination ID storage 402 of the Web server 400 is completed.

In the push-type distribution system having the configuration above, even when the destination ID updating unit 202 of the PUSH server 200 updates a destination ID that is an identifier (ID) allocated to the terminal 300 twice before the destination ID updating unit 202 receives the PUSH transmission request from the Web server 400, a push message transmitted from the PUSH server 200 reaches the application 301 of the terminal 300. Accordingly, a frequency of updating a destination ID in the push-type distribution system can be increased so as to improve security.

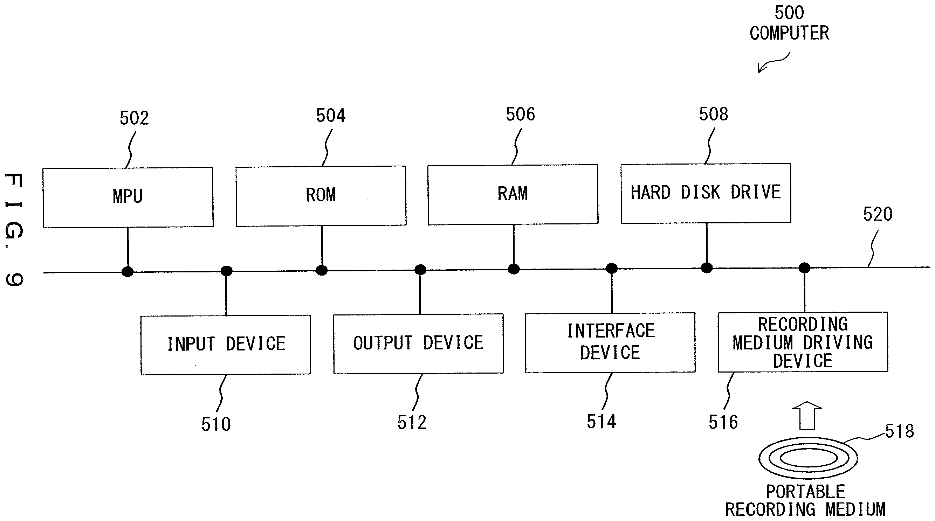

FIG. 9 illustrates an example of a configuration of an information processing device according to the embodiment. The information processing device may be any of the PUSH server 200, the terminal 300, and the Web server 400. The information processing device may be implemented as a general-purpose computer 500. In particular, the PUSH server 200 is implemented as the general-purpose computer 500.

The computer 500 includes a Micro Processing Unit (MPU) 502, a Read Only Memory (ROM) 504, and a Random Access Memory (RAM) 506. The computer 500 further includes a hard disk drive 508, an input device 510, a display 512, an interface device 514, and a recording medium driving device 516. These components are connected to each other via a bus line 520, and can transfer various kinds of data to each other under the control of the MPU 502.

The MPU 502 is a processing unit that controls an operation of the entirety of the computer 500, and functions as a control processing unit of the computer 500.

The ROM 504 is a read-only semiconductor memory in which a prescribed basic control program has been stored. The MPU 502 can control operations of respective components of the computer 500 by reading and executing the basic control program at the time of starting the computer 500.

The RAM 506 is a non-transitory writable/readable semiconductor memory that is used as a working storage area as needed when the MPU 502 executes various control programs.

The hard disk drive 508 is a storage in which the various control programs executed by the MPU 502 or various kinds of data are stored. The MPU 502 performs the various control processes described later by reading and executing a prescribed control program stored in the hard disk drive 508.

Examples of the input device 510 include a mouse and a keyboard. The input device 510 is operated by a user of an information processing device so as to obtain inputs of various kinds of information that are associated with the operation content and transmit the obtained input information to the MPU 502.

Examples of the display 512 include a liquid crystal display. The display 512 displays various texts or images according to display data transmitted from the MPU 502.

The interface device 514 manages the transfer of various kinds of information between various devices connected to the computer 500.

The recording medium driving device 516 is a device that reads various control programs or data stored in a portable recording medium 518. The MPU 502 may perform the various control processes described later by reading and executing a prescribed control program stored in the portable recording medium 518 via the recording medium driving device 516. Examples of the portable recording medium 518 include a flash memory provided with a connecter of the USB (Universal Serial Bus) standard, a CD-ROM (Compact Disc Read Only Memory), and a DVD-ROM (Digital Versatile Disc Read Only Memory).

In order to configure an information processing device by using the computer 500 described above, a control program for causing the MPU 502 to perform processes in the respective processing units above is generated for example. The generated control program has been stored in the hard disk drive 508 or the portable recording medium 518. The MPU 502 is given a prescribed instruction to read and execute the control program. As a result, functions that the information processing device has are provided by the MPU 502.

### <Updating of destination information in a push-type distribution system>

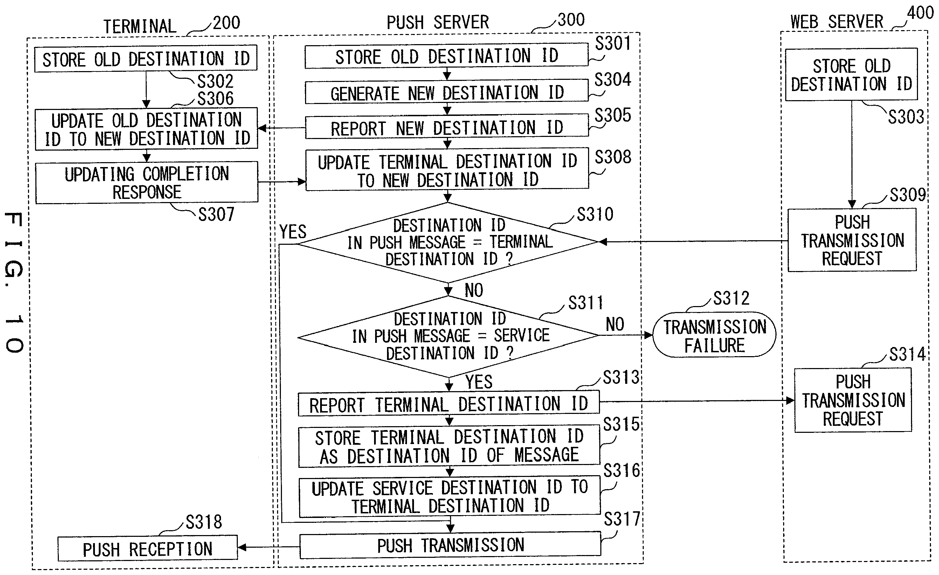

With reference to FIG. 10, processes in a method for updating destination information in a push-type distribution system in an example are described below.

When the PUSH server 200, the terminal 300, and the Web server 400 are the general-purpose computer 500 illustrated in FIG. 8, the description below defines a control program for performing such processes. Namely, the description below is a description of a control program for causing a general-purpose computer to perform the processes described below.

FIG. 10 illustrates an example of a flow of a destination information updating process in an example.

In S301, the destination ID storage 205 of the PUSH server 200 stores an old destination ID that is an identifier of the application 301 stored in the terminal 300 as the terminal destination identifier, and an old destination that is an identifier of the application 301 stored in the Web server 400 as the service destination identifier, in accordance with the application 301 installed onto the terminal 300.

In S302, simultaneously with S301, the destination ID storage 303 of the terminal 300 stores the old destination ID.

In S303, simultaneously with S301, the destination ID storage 402 of the Web server 400 stores the old destination ID.

As described above, it is assumed that all of the destination ID storage 205 of the PUSH server 200, the destination ID storage 303 of the terminal 300, and the destination ID storage 402 of the Web server 400 initially store the old destination ID.

In S304 that follows S301, the destination ID generator 203 of the PUSH server 200 generates a new destination process moves on to S313. When the determination result is "NO (N)", that is, when the destination ID of the push message transmission request report 606 is not the service destination ID of the destination ID storage 205, the process moves on to S312.

In S312, a message indicating transmission failure may be issued because the destination ID of the push message transmission request report 606 is neither the terminal destination ID nor the service destination ID of the destination ID storage 205.

In S313, the destination ID transmitter 206 of the PUSH server 200 transmits "new destination" that corresponds to the application 301 of the terminal 300 as the updated destination ID report 608 to the destination ID receiver 403 of the Web server 400, as a reply to the push message transmission request report 606 from the Web server 400.

In S314 that follows S313, the destination ID receiver 403 of the Web server 400 receives the updated destination ID report 608 that has been transmitted from the destination ID transmitter 206 of the PUSH server 200 in S313. In S314, the destination ID receiver 403 further stores "new destination" that is included in the updated destination ID report 608 and that has been allocated to the terminal 300 in the destination ID storage 402.

In S315 that follows S313, the PUSH transceiver 201 of the PUSH server 200 stores "new destination" stored in the field "terminal destination ID" of the destination table stored in the destination ID storage 205, as a destination ID to be stored in the field "destination ID" 6104 of the push message 610.

In S316 that follows S315, the destination ID updating unit 202 of the PUSH server 200 updates "old destination" stored in the field "service destination ID" in the destination table 2050 stored in the destination ID storage 205 to "new destination". application 301 of the terminal 300 is stored in the field "destination ID" 6064 of the push message transmission request report 606.

In S310, the PUSH receiver 204 of the PUSH server 200 receives the push message transmission request report 606 transmitted from the PUSH requesting unit 401 of the Web server 400.

In S310, the PUSH receiver 204 of the PUSH server 200 refers to the destination table stored in the destination ID storage 205 to obtain the destination ID that corresponds to the application 301 of the terminal 300, in order to generate the push message 610 addressed to the application 301 of the terminal 300. Then, the PUSH receiver 204 of the PUSH server 200 determines whether the destination ID stored in the field "destination ID" 6064 of the received push message transmission request report 606 coincides with the destination ID stored in the field "terminal destination ID" of the destination table stored in the destination ID storage 205. When the determination result is "YES (Y)", that is, when the destination ID of the push message transmission request report 606 is the terminal destination ID of the destination ID storage 205, the process moves on to S317. When the determination result is "NO (N)", that is, when the destination ID of the push message transmission request report 606 is not the terminal destination ID of the destination ID storage 205, the process moves on to S311.

In S311, the PUSH receiver 204 of the PUSH server 200 determines whether the destination ID stored in the field "destination ID" 6064 of the received push message transmission request report 606 coincides with the destination ID stored in the field "service destination ID" of the destination table stored in the destination ID storage 205. When the determination result is "YES (Y), that is, when the destination ID of the push message transmission request report 606 is the service destination ID of the destination ID storage 205, the process moves on to S313. When the determination result is "NO (N)", that is, when the destination ID of the push message transmission request report 606 is not the service destination ID of the destination ID storage 205, the process moves on to S312.

In S312, a message indicating transmission failure may be issued because the destination ID of the push message transmission request report 606 is neither the terminal destination ID nor the service destination ID of the destination ID storage 205.

In S313, the destination ID transmitter 206 of the PUSH server 200 transmits "new destination" that corresponds to the application 301 of the terminal 300 as the updated destination ID report 608 to the destination ID receiver 403 of the Web server 400, as a reply to the push message transmission request report 606 from the Web server 400.

In S314 that follows S313, the destination ID receiver 403 of the Web server 400 receives the updated destination ID report 608 that has been transmitted from the destination ID transmitter 206 of the PUSH server 200 in S313. In S313, the destination ID receiver 403 further stores "new destination" that is included in the updated destination ID report 608 and that has been allocated to the terminal 300 in the destination ID storage 402.

In S315 that follows S313, the PUSH transceiver 201 of the PUSH server 200 stores "new destination" stored in the field "terminal destination ID" of the destination table stored in the destination ID storage 205, as a destination ID to be stored in the field "destination ID" 6104 of the push message 610.

In S316 that follows S315, the destination ID updating unit 202 of the PUSH server 200 updates "old destination" stored in the field "service destination ID" in the destination table 2050 stored in the destination ID storage 205 to "new destination".

The order of the processes of S315 and S316 may be reversed, or the processes of S315 and S316 may be performed simultaneously.

In S317 that follows S316, the PUSH transceiver 201 of the PUSH server 200 transmits the push message 610 to the application 301 of the terminal 300.

In S318 that follows S317, the PUSH transceiver 302 of the terminal 300 receives the push message 610 transmitted from the PUSH transceiver 201 of the PUSH server 200.

As a result of the processes above, in the push-type distribution system, an identifier (ID) (a destination ID) of an application installed onto the terminal 300 can be periodically updated while an information distribution service is continuously provided, and both usability and security of the service can be achieved. It is optional to transmit a report indicating that the identifier (ID) (the destination ID) of the application installed onto the terminal 300 has been updated from the terminal 300 to the Web server 400, and this allows an application to be developed more easily.

Before S309, the processes of S304 to S308 may be repeated such that the destination ID generator 203 of the PUSH server generates a new destination ID and the process of updating destination information is started.

In this case, upon receipt from the terminal 300 of a report indicating that the second updating of a destination ID that is an identifier (ID) allocated to the terminal 300 has been finished before the destination ID updating unit 202 receives the PUSH transmission request from the Web server 400, the destination ID updating unit 202 of the PUSH server 200 updates the destination ID stored in the field "terminal destination ID" in the destination table 2050 stored in the destination ID storage 205 to "new destination ID 2" in the second S308. In this case, the destination ID in the field "service destination ID" in the destination table 2050 remains "old destination". Namely, the destination ID updating unit 202 of the PUSH server 200 updates a destination ID in the field "terminal destination ID" in the destination table 2050, but does not update a destination ID in the field "service destination ID", until the destination ID updating unit 202 receives the PUSH transmission request from the Web server 400.

As a result of the processes above, even when the destination ID updating unit 202 of the PUSH server 200 performs updating of a destination ID that is an identifier (ID) allocated to the terminal 300 twice before the destination ID updating unit 202 receives the PUSH transmission request from the Web server 400, a push message transmitted from the PUSH server 200 reaches the application 301 of the terminal 300. By performing the processes above, a frequency of updating a destination ID in the push-type distribution system can be increased so as to improve security.

### Explanation of Letters or Numerals

- 100: Push-type distribution system
- 200: PUSH server
- 201: PUSH transceiver
- 202: Destination ID updating unit
- 203: Destination ID generator
- 204: PUSH receiver
- 205: Destination ID storage
- 206: Destination ID transmitter
- 300: Terminal (client)
- 301: Application
- 302: PUSH transceiver
- 303: Destination ID storage
- 3011: PUSH executing unit
- 3012: Destination ID reporting unit
- 400: Web server
- 401: PUSH requesting unit
- 402: Destination ID storage
- 403: Destination ID receiver

## Claims

1. An information processing device comprising:
a destination ID storage (402) that, in accordance with an application (301) installed onto a terminal (300), stores a first destination identifier stored in the terminal as a terminal destination identifier, and stores the first destination identifier as a service destination identifier;
a PUSH transceiver (201) that transmits a second destination identifier to the terminal, and receives, from the terminal, a destination ID updating completion report indicating that the terminal has updated the first destination identifier to the second destination identifier;
a destination ID updating unit (202) that updates the terminal destination identifier of the destination ID storage (402) from the first destination identifier to the second destination identifier; and
a PUSH receiver (204) that, when a third destination identifier included in a push message transmission request report received from a Web server (400) coincides with the service destination identifier of the destination ID storage (402), generates a push message including the terminal destination identifier instead of the third destination identifier, and instructs the PUSH transceiver (201) to transmit the push message to the terminal; wherein
the information processing device and the terminal (300) are connected so as to transmit information from the information processing device to the terminal at an arbitrary timing, and the information processing device and the Web server (400) are connected such that the information processing device issues a response in response to a request from the Web server.

2. The information processing device according to claim 1, wherein
the destination ID updating unit (202) generates the second destination identifier that replaces the first destination identifier periodically or in response to a command from the outside.

3. The information processing device according to any one of claims 1 to 2, further comprising:
a destination ID transmitter (206) that reports to the Web server (400) that the identifier of the application has been changed to the second destination identifier, in response to the push message transmission request report from the Web server.

4. The information processing device according to any one of claims 1 to 3, wherein
the PUSH receiver (204) issues a command to cause the terminal to update the second destination identifier stored in the terminal (300) to the third destination identifier and reply with a destination ID updating completion report indicating that updating of the identifier of the application has been completed before receiving, from the Web server (400), the push message transmission request report that requests distribution of the push message to the first destination identifier, and a command to cause the destination ID updating unit (202) to update the terminal destination identifier of the destination ID storage (402) from the second destination identifier to the third destination identifier upon receipt of the destination ID updating completion report.

5. A destination information updating method performed by a computer, the destination information updating method comprising:
in accordance with an application installed onto a terminal (300), storing a first destination identifier stored in the terminal as a terminal destination identifier, and storing the first destination identifier as a service destination identifier;
transmitting a second destination identifier to the terminal, and receiving, from the terminal, a destination ID updating completion report indicating that the terminal has updated the first destination identifier to the second destination identifier;
updating the terminal destination identifier from the first destination identifier to the second destination identifier; and
when a third destination identifier included in a push message transmission request report received from a Web server (400) coincides with the service destination identifier, generating a push message including the terminal destination identifier instead of the third destination identifier, and instructing the PUSH transceiver to transmit the push message to the terminal; wherein
the computer and the terminal are connected so as to transmit information from the computer to the terminal at an arbitrary timing, and the computer and the Web server are connected such that the computer issues a response in response to a request from the Web server.

6. The destination information updating method according to claim 5, further comprising:
generating the second destination identifier that replaces the first destination identifier periodically or in response to a command from the outside.

7. The destination information updating method according to claim 5 or 6, further comprising:
reporting that the identifier of the application has been changed to the second destination identifier, in response to the push message transmission request report from the Web server (400).

8. The destination information updating method according to any one of claims 5 to 7, further comprising:
issuing a command to cause the terminal to update the second destination identifier stored in the terminal (300) to the third destination identifier and reply with a destination ID updating completion report indicating that updating of the identifier of the application has been completed before receiving, from the Web server (400), the push message transmission request report that requests distribution of the push message to the first destination identifier, and a command to update the terminal destination identifier from the second destination identifier to the third destination identifier upon receipt of the destination ID updating completion report.

9. A program for causing a computer to execute a process comprising:
in accordance with an application installed onto a terminal (300), storing a first destination identifier stored in the terminal as a terminal destination identifier, and storing the first destination identifier as a service destination identifier;
transmitting a second destination identifier to the terminal, and receiving, from the terminal, a destination ID updating completion report indicating that the terminal has updated the first destination identifier to the second destination identifier;
updating the terminal destination identifier from the first destination identifier to the second destination identifier; and
when a third destination identifier included in a push message transmission request report received from a Web server (400) coincides with the service destination identifier, generating a push message including the terminal destination identifier instead of the third destination identifier, and instructing a PUSH transceiver to transmit the push message to the terminal; wherein
the computer and the terminal are connected so as to transmit information from the computer to the terminal at an arbitrary timing, and the computer and the Web server are connected such that the computer issues a response in response to a request from the Web server.

10. The program according to claim 11 or 12 for causing the computer to execute the process further comprising:
generating the second destination identifier that replaces the first destination identifier periodically or in response to a command from the outside.

11. The program according to claim 9 or 12 for causing the computer to execute the process further comprising:
reporting to the Web server (400) that the identifier of the application has been changed to the second destination identifier, in response to the push message transmission request report from the Web server.

12. The program according to any one of claims 9 to 11 for causing the computer to execute the process further comprising:
issuing a command to cause the terminal to update the second destination identifier stored in the terminal to the third destination identifier and reply with a destination ID updating completion report indicating that updating of the identifier of the application has been completed before receiving, from the Web server (400), the push message transmission request report that requests distribution of the push message to the first destination identifier, and a command to update the terminal destination identifier from the second destination identifier to the third destination identifier upon receipt of the destination ID updating completion report.

## Patentansprüche

1. Informationsverarbeitungsvorrichtung, umfassend:
eine Ziel-ID-Speichervorrichtung (402), die in Übereinstimmung mit einer Anwendung (301), die auf einem Endgerät (300) installiert ist, eine erste Zielkennung, die in dem Endgerät gespeichert ist, als Endgerätzielkennung speichert und die erste Zielkennung als Dienstzielkennung speichert;
einen PUSH-Transceiver (201), der eine zweite Zielkennung an das Endgerät sendet und von dem Endgerät eine Meldung über den Abschluss der Aktualisierung einer Ziel-ID empfängt, die angibt, dass das Endgerät die erste Zielkennung auf die zweite Zielkennung aktualisiert hat;
eine Ziel-ID-Aktualisierungseinheit (202), welche die Endgerätzielkennung der Ziel-ID-Speichervorrichtung (402) von der ersten Zielkennung auf die zweite Zielkennung aktualisiert; und
einen PUSH-Empfänger (204), der, wenn eine dritte Zielkennung, die in einer Meldung zum Anfragen des Sendens einer Push-Nachricht enthalten ist, die von einem Web-Server (400) empfangen wird, mit der Dienstzielkennung der Ziel-ID-Speichervorrichtung(402) übereinstimmt, eine Push-Nachricht generiert, welche die Endgerätzielkennung anstelle der dritten Zielkennung umfasst, und den PUSH-Transceiver (201) anweist, die Push-Nachricht an das Endgerät zu senden; wobei
die Informationsverarbeitungsvorrichtung und das Endgerät (300) verbunden sind, um zu einem beliebigen Zeitpunkt Informationen von der Informationsverarbeitungsvorrichtung an das Endgerät zu senden, und die Informationsverarbeitungsvorrichtung und der Web-Server (400) derart verbunden sind, dass die Informationsverarbeitungsvorrichtung eine Antwort als Reaktion auf eine Anfrage von dem Web-Server erteilt.

2. Informationsverarbeitungsvorrichtung nach Anspruch 1, wobei
die Ziel-ID-Aktualisierungseinheit (202) die zweite Zielkennung, welche die erste Zielkennung ersetzt, periodisch oder als Reaktion auf einen Befehl von außen generiert.

3. Informationsverarbeitungsvorrichtung nach einem der Ansprüche 1 bis 2, ferner umfassend:
einen Ziel-ID-Sender (206), der dem Web-Server (400) meldet, dass die Kennung der Anwendung auf die zweite Zielkennung geändert wurde, als Reaktion auf die Meldung zum Anfragen des Sendens einer Push-Nachricht von dem Web-Server.

4. Informationsverarbeitungsvorrichtung nach einem der Ansprüche 1 bis 3, wobei
der PUSH-Empfänger (204) einen Befehl erteilt, um zu bewirken, dass das Endgerät die zweite Zielkennung, die in dem Endgerät (300) gespeichert ist, auf die dritte Zielkennung aktualisiert und mit einer Meldung über den Abschluss der Aktualisierung einer Ziel-ID antwortet, die angibt, dass das Aktualisieren der Kennung der Anwendung abgeschlossen wurde, bevor von dem Web-Server (400) die Meldung zum Anfragen des Sendens einer Push-Nachricht empfangen wurde, welche die Verbreitung der Push-Nachricht an die erste Zielkennung anfragt, und einen Befehl erteilt, um zu bewirken, dass die Ziel-ID-Aktualisierungseinheit (202) beim Empfang der Meldung über den Abschluss der Aktualisierung einer Ziel-ID die Endgerätzielkennung der Ziel-ID-Speichervorrichtung (402) von der zweiten Zielkennung auf die dritte Zielkennung aktualisiert.

5. Verfahren zum Aktualisieren von Zielinformationen, das durch einen Computer ausgeführt wird, wobei das Verfahren zum Aktualisieren von Zielinformationen folgende Schritte umfasst:
in Übereinstimmung mit einer Anwendung, die auf einem Endgerät (300) installiert ist, Speichern einer ersten Zielkennung, die in dem Endgerät gespeichert ist, als Endgerätzielkennung, und Speichern der ersten Zielkennung als Dienstzielkennung;
Senden einer zweiten Zielkennung an das Endgerät und Empfangen von dem Endgerät einer Meldung über den Abschluss der Aktualisierung einer Ziel-ID, die angibt, dass das Endgerät die erste Zielkennung auf die zweite Zielkennung aktualisiert hat;
Aktualisieren der Endgerätzielkennung von der ersten Zielkennung auf die zweite Zielkennung; und
wenn eine dritte Zielkennung, die in einer Meldung zum Anfragen des Sendens einer Push-Nachricht enthalten ist, die von einem Web-Server (400) empfangen wird, mit der Dienstzielkennung übereinstimmt, Generieren einer Push-Nachricht, welche die Endgerätzielkennung anstelle der dritten Zielkennung umfasst, und Anweisen des PUSH-Transceivers, damit er die Push-Nachricht an das Endgerät sendet; wobei der Computer und das Endgerät verbunden sind, um zu einem beliebigen Zeitpunkt Informationen von dem Computer an das Endgerät zu senden, und der Computer und der Web-Server derart verbunden sind, dass der Computer eine Antwort als Reaktion auf eine Anfrage von dem Web-Server erteilt.

6. Verfahren zum Aktualisieren von Zielinformationen nach Anspruch 5, ferner umfassend folgenden Schritt:
Generieren der zweiten Zielkennung, welche die erste Zielkennung ersetzt, periodisch oder als Reaktion auf einen Befehl von außen.

7. Verfahren zum Aktualisieren von Zielinformationen nach Anspruch 5 oder 6, ferner umfassend folgenden Schritt:
Melden, dass die Kennung der Anwendung auf die zweite Zielkennung geändert wurde, als Reaktion auf die Meldung zum Anfragen des Sendens einer Push-Nachricht von dem Web-Server (400).

8. Verfahren zum Aktualisieren von Zielinformationen nach einem der Ansprüche 5 bis7, ferner umfassend folgenden Schritt:
Erteilen eines Befehls, um zu bewirken, dass das Endgerät die zweite Zielkennung, die in dem Endgerät (300) gespeichert ist, auf die dritte Zielkennung aktualisiert und mit einer Meldung über den Abschluss der Aktualisierung einer Ziel-ID antwortet, die angibt, dass das Aktualisieren der Kennung der Anwendung abgeschlossen wurde, bevor von dem Web-Server (400) die Meldung zum Anfragen des Sendens einer Push-Nachricht empfangen wurde, welche die Verbreitung der Push-Nachricht an die erste Zielkennung anfragt, und Erteilen eines Befehls zum Aktualisieren der Endgerätzielkennung von der zweiten Zielkennung auf die dritte Zielkennung beim Empfang der Meldung über den Abschluss der Aktualisierung einer Ziel-ID.

9. Programm zum Bewirken, dass ein Computer einen Prozess ausführt, der folgende Schritte umfasst:
in Übereinstimmung mit einer Anwendung, die auf einem Endgerät (300) installiert ist, Speichern einer ersten Zielkennung, die in dem Endgerät gespeichert ist, als Endgerätzielkennung, und Speichern der ersten Zielkennung als Dienstzielkennung;
Senden einer zweiten Zielkennung an das Endgerät, und Empfangen von dem Endgerät einer Meldung über den Abschluss der Aktualisierung einer Ziel-ID, die angibt, dass das Endgerät die erste Zielkennung auf die zweite Zielkennung aktualisiert hat;
Aktualisieren der Endgerätzielkennung von der ersten Zielkennung auf die zweite Zielkennung; und
wenn eine dritte Zielkennung, die in einer Meldung zum Anfragen des Sendens einer Push-Nachricht enthalten ist, die von einem Web-Server (400) empfangen wird, mit der Dienstzielkennung übereinstimmt, Generieren einer Push-Nachricht, welche die Endgerätzielkennung anstelle der dritten Zielkennung umfasst, und Anweisen des PUSH-Transceivers, damit er die Push-Nachricht an das Endgerät sendet; wobei der Computer und das Endgerät verbunden sind, um zu einem beliebigen Zeitpunkt Informationen von dem Computer an das Endgerät zu senden, und der Computer und der Web-Server derart verbunden sind, dass der Computer eine Antwort als Reaktion auf eine Anfrage von dem Web-Server erteilt.

10. Programm nach Anspruch 11 oder 12 zum Bewirken, dass der Computer den Prozess ausführt, der ferner folgenden Schritt umfasst:
Generieren der zweiten Zielkennung, welche die erste Zielkennung ersetzt, periodisch oder als Reaktion auf einen Befehl von außen.

11. Programm nach Anspruch 9 oder 12 zum Bewirken, dass der Computer den Prozess ausführt, der ferner folgenden Schritt umfasst:
Melden an den Web-Server (400), dass die Kennung der Anwendung als Reaktion auf die Meldung zum Anfragen des Sendens einer Push-Nachricht von dem Web-Server auf die zweite Zielkennung geändert wurde.

12. Programm nach einem der Ansprüche 9 bis 11 zum Bewirken, dass der Computer den Prozess ausführt, der ferner folgenden Schritt umfasst:
Erteilen eines Befehls, um zu bewirken, dass das Endgerät die zweite Zielkennung, die in dem Endgerät gespeichert ist, auf die dritte Zielkennung aktualisiert und mit einer Meldung über den Abschluss der Aktualisierung einer Ziel-ID antwortet, die angibt, dass das Aktualisieren der Kennung der Anwendung abgeschlossen wurde, bevor von dem Web-Server (400) die Meldung zum Anfragen des Sendens einer Push-Nachricht empfangen wurde, welche die Anfrage zur Verbreitung der Push-Nachricht an die erste Zielkennung umfasst, und Erteilen eines Befehls, um beim Empfang der Meldung über den Abschluss des Aktualisierens der Ziel-ID die Endgerätzielkennung von der zweiten Zielkennung auf die dritte Zielkennung zu aktualisieren.

## Revendications

1. Dispositif de traitement d'informations comprenant :
un magasin de stockage d'identifiants de destination (402) qui, conformément à une application (301) installée sur un terminal (300), stocke un premier identifiant de destination stocké dans le terminal en tant qu'un identifiant de destination de terminal, et stocke le premier identifiant de destination en tant qu'un identifiant de destination de service ;
un émetteur-récepteur PUSH (201) qui transmet un deuxième identifiant de destination au terminal, et reçoit, en provenance du terminal, un rapport d'achèvement de mise à jour d'identifiant de destination indiquant que le terminal a mis à jour le premier identifiant de destination vers le deuxième identifiant de destination ;
une unité de mise à jour d'identifiant de destination (202) qui met à jour l'identifiant de destination de terminal du magasin de stockage d'identifiants de destination (402), du premier identifiant de destination vers le deuxième identifiant de destination ; et
un récepteur PUSH (204) qui, lorsqu'un troisième identifiant de destination inclus dans un rapport de demande de transmission de message de poussée reçu en provenance d'un serveur web (400) coïncide avec l'identifiant de destination de service du magasin de stockage d'identifiants de destination (402), génère un message de poussée incluant l'identifiant de destination de terminal au lieu du troisième identifiant de destination, et donne instruction à l'émetteur-récepteur PUSH (201) de transmettre le message de poussée au terminal ; dans lequel
le dispositif de traitement d'informations et le terminal (300) sont connectés de manière à transmettre des informations, du dispositif de traitement d'informations au terminal, à une temporisation arbitraire, et le dispositif de traitement d'informations et le serveur web (400) sont connectés de sorte que le dispositif de traitement d'informations émet une réponse en réponse à une demande en provenance du serveur web.

2. Dispositif de traitement d'informations selon la revendication 1, dans lequel :
l'unité de mise à jour d'identifiant de destination (202) génère le deuxième identifiant de destination qui remplace le premier identifiant de destination, périodiquement, ou en réponse à une commande en provenance de l'extérieur.

3. Dispositif de traitement d'informations selon l'une quelconque des revendications 1 à 2, comprenant en outre :
un émetteur d'identifiant de destination (206) qui signale au serveur web (400) que l'identifiant de l'application a été remplacé par le deuxième identifiant de destination, en réponse au rapport de demande de transmission de message de poussée en provenance du serveur web.

4. Dispositif de traitement d'informations selon l'une quelconque des revendications 1 à 3, dans lequel :
le récepteur PUSH (204) émet une commande pour amener le terminal à mettre à jour le deuxième identifiant de destination stocké dans le terminal (300) vers le troisième identifiant de destination, et à répondre avec un rapport d'achèvement de mise à jour d'identifiant de destination indiquant que la mise à jour de l'identifiant de l'application a été achevée avant la réception, en provenance du serveur web (400), du rapport de demande de transmission de message de poussée qui demande la distribution du message de poussée au premier identifiant de destination, et une commande pour amener l'unité de mise à jour d'identifiant de destination (202) à mettre à jour l'identifiant de destination de terminal du magasin de stockage d'identifiants de destination (402), du deuxième identifiant de destination vers le troisième identifiant de destination, suite à la réception du rapport d'achèvement de mise à jour d'identifiant de destination.

5. Procédé de mise à jour d'informations de destination mis en oeuvre par un ordinateur, le procédé de mise à jour d'informations de destination comprenant les étapes ci-dessous consistant à :
conformément à une application installée sur un terminal (300), stocker un premier identifiant de destination stocké dans le terminal en tant qu'un identifiant de destination de terminal, et stocker le premier identifiant de destination en tant qu'un identifiant de destination de service ;
transmettre un deuxième identifiant de destination au terminal, et recevoir, en provenance du terminal, un rapport d'achèvement de mise à jour d'identifiant de destination indiquant que le terminal a mis à jour le premier identifiant de destination vers le deuxième identifiant de destination ;
mettre à jour l'identifiant de destination de terminal, du premier identifiant de destination vers le deuxième identifiant de destination ; et
lorsqu'un troisième identifiant de destination inclus dans un rapport de demande de transmission de message de poussée reçu en provenance d'un serveur web (400) coïncide avec l'identifiant de destination de service, générer un message de poussée incluant l'identifiant de destination de terminal au lieu du troisième identifiant de destination, et donner instruction à l'émetteur-récepteur PUSH de transmettre le message de poussée au terminal ; dans lequel
l'ordinateur et le terminal sont connectés de manière à transmettre des informations, de l'ordinateur au terminal, à une temporisation arbitraire, et l'ordinateur et le serveur web sont connectés de sorte que l'ordinateur émet une réponse en réponse à une demande en provenance du serveur web.

6. Procédé de mise à jour d'informations de destination selon la revendication 5, comprenant en outre l'étape ci-dessous consistant à :
générer le deuxième identifiant de destination qui remplace le premier identifiant de destination, périodiquement, ou en réponse à une commande provenant de l'extérieur.

7. Procédé de mise à jour d'informations de destination selon la revendication 5 ou 6, comprenant en outre l'étape ci-dessous consistant à :
signaler que l'identifiant de l'application a été remplacé par le deuxième identifiant de destination, en réponse au rapport de demande de transmission de message de poussée en provenance du serveur web (400).

8. Procédé de mise à jour d'informations de destination selon l'une quelconque des revendications 5 à 7, comprenant en outre l'étape ci-dessous consistant à :
émettre une commande pour amener le terminal à mettre à jour le deuxième identifiant de destination stocké dans le terminal (300) vers le troisième identifiant de destination, et répondre avec un rapport d'achèvement de mise à jour d'identifiant de destination indiquant que la mise à jour de l'identifiant de l'application a été achevée avant la réception, en provenance du serveur web (400), du rapport de demande de transmission de message de poussée qui demande la distribution du message de poussée au premier identifiant de destination, et une commande pour mettre à jour l'identifiant de destination de terminal du deuxième identifiant de destination vers le troisième identifiant de destination, suite à la réception du rapport d'achèvement de mise à jour d'identifiant de destination.

9. Programme pour amener un ordinateur à exécuter un processus comprenant les étapes ci-dessous consistant à :
conformément à une application installée sur un terminal (300), stocker un premier identifiant de destination stocké dans le terminal en tant qu'un identifiant de destination de terminal, et stocker le premier identifiant de destination en tant qu'un identifiant de destination de service ;
transmettre un deuxième identifiant de destination au terminal, et recevoir, en provenance du terminal, un rapport d'achèvement de mise à jour d'identifiant de destination indiquant que le terminal a mis à jour le premier identifiant de destination vers le deuxième identifiant de destination ;
mettre à jour l'identifiant de destination de terminal, du premier identifiant de destination vers le deuxième identifiant de destination ; et
lorsqu'un troisième identifiant de destination inclus dans un rapport de demande de transmission de message de poussée reçu en provenance d'un serveur web (400) coïncide avec l'identifiant de destination de service, générer un message de poussée incluant l'identifiant de destination de terminal au lieu du troisième identifiant de destination, et donner instruction, à un émetteur-récepteur PUSH, de transmettre le message de poussée au terminal ; dans lequel
l'ordinateur et le terminal sont connectés de manière à transmettre des informations, de l'ordinateur au terminal, à une temporisation arbitraire, et l'ordinateur et le serveur web sont connectés de sorte que l'ordinateur émet une réponse en réponse à une demande en provenance du serveur web.

10. Programme selon la revendication 11 ou 12 pour amener l'ordinateur à exécuter le processus comprenant en outre l'étape ci-dessous consistant à :
générer le deuxième identifiant de destination qui remplace le premier identifiant de destination, périodiquement, ou en réponse à une commande provenant de l'extérieur.

11. Programme selon la revendication 9 ou 12, pour amener l'ordinateur à exécuter le processus comprenant en outre l'étape ci-dessous consistant à :
signaler au serveur web (400) que l'identifiant de l'application a été remplacé par le deuxième identifiant de destination, en réponse au rapport de demande de transmission de message de poussée en provenance du serveur web.

12. Programme selon l'une quelconque des revendications 9 à 11, pour amener l'ordinateur à exécuter le processus comprenant en outre l'étape ci-dessous consistant à :
émettre une commande pour amener le terminal à mettre à jour le deuxième identifiant de destination, stocké dans le terminal, vers le troisième identifiant de destination, et répondre par un rapport d'achèvement de mise à jour d'identifiant de destination indiquant que la mise à jour de l'identifiant de l'application a été achevée, avant la réception, en provenance du serveur web (400), du rapport de demande de transmission de message de poussée qui demande la distribution du message de poussée au premier identifiant de destination, et une commande pour mettre à jour l'identifiant de destination de terminal, du deuxième identifiant de destination vers le troisième identifiant de destination, suite à la réception du rapport d'achèvement de mise à jour d'identifiant de destination.
